# EUROPÄISCHE PATENTSCHRIFT

(11) **EP 2 347 193 B1**
(45) Veröffentlichungstag und Bekanntmachung des Hinweises auf die Patenterteilung: **02.01.2013**
(21) Anmeldenummer: 09753111.5
(22) Anmeldetag: 17.11.2009
(51) Int. Cl.: F24J 2/14

(54) **FIXED FOCUS PARABOLRINNEN-KOLLEKTOR**
FIXED FOCUS PARABOLIC TROUGH COLLECTOR
COLLECTEUR CYLINDRO-PARABOLIQUE À FOYER FIXE

(30) Priorität: 18.11.2008 DE 102008057868
(43) Veröffentlichungstag der Anmeldung: 27.07.2011
(73) Patentinhaber: Deutsches Zentrum für Luft- und Raumfahrt e.V., 51147 Köln (DE)
(72) Erfinder: PRAHL, Christoph, E-04007 Almeria (ES)
(74) Vertreter: von Kreisler Selting Werner
(86) Internationale Anmeldenummer: PCT/EP2009/065313
(87) Internationale Veröffentlichungsnummer: WO 2010/057884

(56) Entgegenhaltungen:
- US-A- 4 173 213
- US-A- 4 359 265
- US-A- 4 520 794
- US-A1- 2002 075 579

## Beschreibung

Die Erfindung betrifft einen Fixed Focus Parabolrinnen-Kollektor für solarthermische Kraftwerke zum Einfangen von Solarstrahlung, mit einer langgestreckten Spiegelstruktur, die eine Brennlinie bildet, und einem entlang der Brennlinie verlaufenden Absorberrohr.

Solarthermische Kraftwerke nutzen die Energie des Sonnenlichts zur Stromerzeugung. Die Solarstrahlung wird mittels optischer Konzentratoren auf einen Absorber fokussiert, in welchem ein Wärmeträger zirkuliert. Die optischen Konzentratoren stellen den größten Investitionsposten von solarthermischen Kraftwerken dar und beeinflussen deren Wirkungsgrad maßgeblich. Verschiedene Forschungsprojekte beziehen sich auf die Entwicklung neuer Materialien für die Kollektoren. Wichtige Parameter für die Energieausbeute bzw. den Wirkungsgrad sind Formgebung und Konstruktion des Kollektors, dabei werden hohe Anforderungen an die Fertigungstoleranzen und Stabilität gestellt.

Bekannt sind solarthermische Kraftwerke mit Parabolrinnen-Kollektor. Ein Parabolrinnen-Kollektor enthält eine langgestreckte Spiegelstruktur mit parabelförmigem Querschnitt. Typische Aperturöffnungen betragen 5 m - 7 m. Einzelne "Solar Collector Elements" (SCE) von ca. 12 m Länge werden zu Einheiten von 150 m Länge zusammengesetzt, die im allgemeinen in Nord-Süd-Richtung ausgerichtet ist. Die Einheiten werden mit einer zentralen Antriebseinheit gekoppelt. Der Schwerpunkt und somit die Drehachse der Spiegelstruktur bzw. der betreffenden Tragstruktur befindet sich in der Nähe des Scheitels der Parabel, ca. 1,80 m von dem Absorberrohr entfernt. Bedingt durch die Nachführung der gesamten Einheit aus Spiegelstruktur und Absorberrohr wird erreicht, dass kein "blocking" oder "shading" auftritt und die projizierte Aperturöffnung über den Tag hinweg nahezu konstant ist. Somit wird ein hoher Jahresertrag realisiert. Der Konzentrationsfaktor liegt bei etwa 50. Größere Konzentrationsfaktoren setzen größere Aperturöffnungen voraus. Damit steigen die Anforderungen an die optische Genauigkeit, da sich mögliche Spiegelfehler mit steigendem Abstand zum Absorberrohr stärker auswirken.

Die Windlast ist die größte auf den Kollektor einwirkende Kraft, die mit wachsender Apertur und Spiegelfläche an Bedeutung gewinnt. Daher werden bei größeren Kollektoren aufwendige und schwere Tragstrukturen benötigt. Das mitbewegte Absorberrohr außerhalb der Drehachse erfordert flexible Rohrverbinder, welche für hohe Temperaturen und Drucke ausgelegt sein müssen. Hier kommen Kugelgelenke (ball joints) zum Einsatz. Insbesondere bei der Direktverdampfung stellen solche Gelenke wegen der hohen Belastungen kritische Punkte dar.

Bekannt sind ferner Fresnel-Kollektoren. Der Fresnel-Kollektor ist ein linienkonzentrierendes System mit feststehendem Absorberrohr. Schmale Spiegelreihen werden individuell rotiert, um im Tagesverlauf das Sonnenlicht in Richtung des Absorberrohrs zu fokussieren. Die einzelnen Spiegelreihen können aus Flachglas hergestellt werden, das sich in die erforderliche Krümmung biegen lässt. Die Konstruktion ist weniger windanfällig. Damit sich die Spiegelreihen möglichst wenig verschatten, wird das Absorberrohr in einer Höhe von etwa 8 m über den Spiegelreihen angebracht. Mit wachsendem Abstand zwischen Spiegel und Absorber steigen auch die Anforderungen an die Spiegelgenauigkeit und die Nachführung. Bedingt durch blocking, shading und die höheren Cosinusverluste erreicht der Fresnel-Kollektor im Vergleich zum Parabolrinnen-Kollektor einen geringeren Jahresabtrag.

In US 4,173,213 A ist ein Parabolrinnen-Kollektor beschrieben, der zwei parabelförmig gekrümmte Spiegelsegmente aufweist, die die einfallende Solarenergie einfangen. Ein erstes Spiegelsegment weist einen Schlitz auf, hinter dem ein planarer Reflektor angeordnet ist. Die von dem zweiten Spiegelsegment eingefangene Solarenergie wird auf den Reflektor und von diesem auf das Absorberrohr geleitet.

Der Erfindung liegt die Aufgabe zugrunde, einen Parabolrinnen-Kollektor zu schaffen, der einen hohen Jahresertrag liefert, eine geringe Windanfälligkeit hat und einfach und kostengünstig zu realisieren ist.

Der erfindungsgemäße Fixed Focus Parabolrinnen-Kollektor ist durch den Patentanspruch 1 definiert. Er ist dadurch gekennzeichnet, dass die Spiegelstruktur aus mehreren Spiegelsegmenten besteht, wobei mindestens zwei benachbarte Spiegelsegmente einen Spalt bilden, durch den Strahlung, die von einem dritten oder weiteren Spiegelsegmenten reflektiert wird, auf das Absorberrohr trifft. Die Erfindung benutzt mehrere in Richtung der einfallenden Solarstrahlung (oder in Gegenrichtung) gegeneinander versetzte Spiegelsegmente, die alle denselben Brennpunkt haben. Die Spiegelsegmente sind starr
miteinander verbunden und rotieren gemeinsam um das Absorberrohr. Der Fixed Focus Parabolrinnen-Kollektor hat wegen der gegeneinander versetzt angeordneten Spiegelsegmente eine geringe Kollektortiefe. Die Kollektorfläche ist durchbrochen, so dass die auf den Kollektor wirkende Windlast verringert ist. Die Länge der Strahlenwege ist für die reflektierte Solarstrahlung minimiert. Dadurch und infolge der Vermeidung von Abschattung ergeben sich ein hoher Wirkungsgrad und eine hohe Leistungsausbeute.

Vorzugsweise sind die Spiegelsegmente symmetrisch zu einer Längsmittelebene der Spiegelstruktur angeordnet, wobei die Längsmittelebene das Absorberrohr (Brennlinie) und die Scheitellinie aller Parabel-Segmente enthält.

Vorzugsweise sind die Spiegelsegmente in der Projektion von Strahlung, die parallel zu der Längsmittelebene einfällt, überlappungsfrei angeordnet. Auf diese Weise werden Abschattungen von Spiegelbereichen vermieden. Die Spiegelsegmente sind vorzugsweise so angeordnet, dass Strahlung, die parallel zu der Längsmittelebene einfällt, den Spalt nicht passieren kann. Dies bedeutet, dass das vorgelagerte Spiegelsegment die Lücke zwischen zwei benachbarten Spiegelsegmenten genau abdeckt. Dadurch wird erreicht, dass keine im Bereich der Spiegelsegmente einfallende Strahlung verloren geht.

Bei einer bevorzugten Ausführungsform der Erfindung ist vorgesehen, dass zwei symmetrisch zu der Längsmittelebene angeordnete seitliche Spiegelsegmente gegenüber einem mittigen Spiegelsegment in Richtung des Strahlungseinfalls vorversetzt sind und dass zwei äußere Spiegelsegmente gegenüber den seitlichen Spiegelsegmenten zurückgesetzt sind. Dadurch erhält man eine kompakte Spiegelstruktur von geringer Tiefe.

Besonders vorteilhaft ist es, wenn die Spiegelsegmente an einer gemeinsamen Stützstruktur befestigt sind, die um das Absorberrohr schwenkbar ist. Bei einer derartigen Anordnung sind die tragende Struktur und die Spiegelsegmente so angeordnet, dass ihr gemeinsamer Schwerpunkt mit dem Brennpunkt der Spiegelstruktur zusammenfällt. Dadurch sind die Drehachse und das Absorberrohr koaxial zueinander. Es entfallen aufwendige flexible Rohrverbinder und die Absorberrohre können auf dem kürzesten Weg miteinander verbunden werden.

Der Fixed Focus Parabolrinnen-Kollektor kann über seine Länge in einzelne Module aufgeteilt werden, die individuell angetrieben sind. Dadurch entfällt eine schwere Torque-Box, welche das Drehmoment über die gesamte Kollektorlänge übertragen muss. Außerdem ist ein ebenes Gelände über die gesamte Kollektorlänge nicht erforderlich. Da der Kollektor frei um das Absorberrohr drehen kann, ist eine sichere Stow-Position möglich, bei der die Spiegelfläche zum Boden hin weist.

Im Folgenden wird unter Bezugnahme auf die Zeichnungen ein Ausführungsbeispiel der Erfindung näher erläutert.

Es zeigen:
- Fig. 1: eine schematische Darstellung einer aus mehreren Spiegelsegmenten bestehenden Spiegelstruktur mit eingezeichneten einfallenden und reflektierten Lichtstrahlen und
- Fig. 2: die Spiegelstruktur nach Figur 1 in Verbindung mit einer tragenden Stützstruktur, wobei die Hauptträgheitsachse mit dem Absorberrohr zusammenfällt.

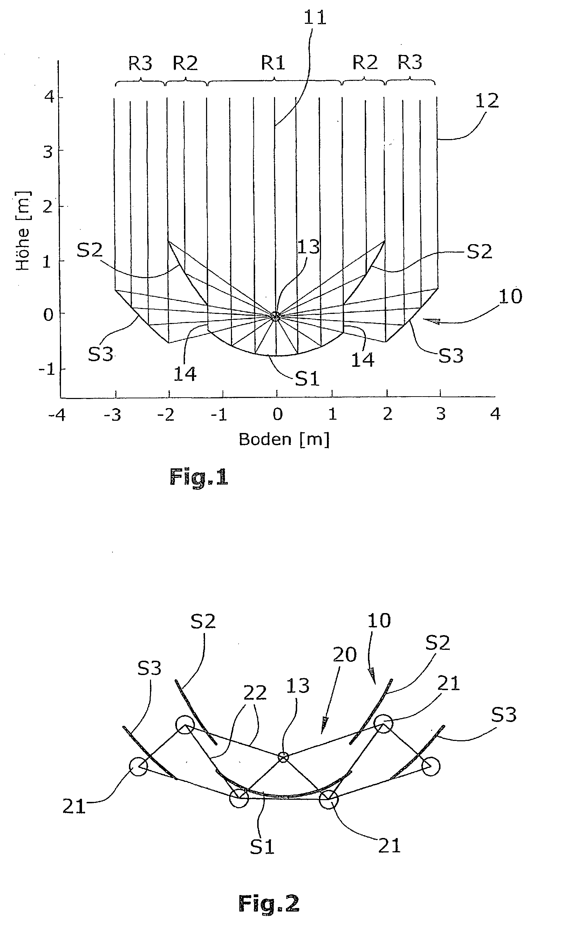

In Figur 1 ist eine mögliche Anordnung mehrerer Spiegelsegmente in einem Fixed Focus Parabolrinnen-Kollektor dargestellt. Dabei sind Spiegelsegmente, welche Parabelsegmenten mit unterschiedlichen Brennweiten entsprechen, so um einen gemeinsamen Brennpunkt angeordnet, dass die reflektierten Strahlen ungehindert das Absorberrohr erreichen.

Die Spiegelstruktur, die generell mit 10 bezeichnet ist, besteht aus mehreren parabelförmig gekrümmten Spiegelsegmenten. Bei dem vorliegenden Ausführungsbeispiel ist ein mittiges Spiegelsegment S1 vorhanden, das von zwei seitlichen Spiegelsegmenten S2 flankiert ist. An jeder Außenseite befindet sich ein äußeres Spiegelsegment S3.

Die Spiegelstruktur 10 wird dem Sonnenstand nachgeführt, so dass die Längsmittelebene 11 der Spiegelstruktur parallel zu der Richtung 12 der einfallenden Solarstrahlung ausgerichtet ist. Im Fokus der Spiegelstruktur 10 befindet sich das Absorberrohr 13, welches das Sonnenlicht an seiner Oberfläche absorbiert und den im Absorberrohr zirkulierenden Wärmeträger aufheizt. Die Spiegelstruktur 10 und das Absorberrohr 13 bilden einen langgestreckten Kollektor, der hier als Fixed Focus Parabolrinnen-Kollektor bezeichnet wird, obwohl die Spiegelsegmente S1, S2, S3 keine geschlossene Parabolrinne bilden. Der mittlere Strahlungsbereich R1 ist dem mittleren Spiegelsegment S1 zugeordnet, die seitlichen Strahlungsbereiche R2 sind den seitlichen Spiegelsegmenten S2 zugeordnet und die äußeren Strahlungsbereiche R3 sind den äußeren Spiegelsegmenten S3 zugeordnet. Zwischen dem Spiegelsegment S1 und jedem der beiden angrenzenden Spiegelsegmente S2 befindet sich ein Spalt 14, der parallel zur Längsmittelebene 11 verläuft. Durch diesen Spalt 14 fällt die von dem äußeren Spiegelsegment S3 reflektierte Strahlung auf das Absorberrohr 13. Sämtliche Spiegelsegmente sind auf das Absorberrohr 13 fokussiert. Durch die verschachtelte Anordnung der Spiegelsegmente mit gegenüber dem mittigen Spiegelsegment S1 vorverlagerten seitlichen Spiegelsegmenten S2 und zurückverlagerten äußeren Spiegelsegmenten S3 wird die Länge der reflektierten Strahlen minimiert. Dadurch wird der optische Wirkungsgrad durch mögliche Spiegelfehler weniger stark beeinflusst, was wiederum eine Vergrößerung der Apertur vereinfacht und die Anforderungen an die optische Qualität, insbesondere des mittigen Spiegelsegments S1, verringert.

Figur 2 zeigt die Anordnung der Spiegelsegmente S1, S2, S3 an einer gemeinsamen Stützstruktur 20. Eine mögliche Realisierung der Stützstruktur ist eine Fachwerkstruktur mit längslaufenden Trägern 21, die hier als Rohre ausgebildet sind, und querlaufenden Streben 22. Die Stützstruktur 20 hat zusammen mit der Spiegelstruktur 10 eine Hauptträgheitsachse, die mit dem Absorberrohr 13 zusammenfällt. Vorzugsweise ist die Hauptträgheitsachse koaxial zum Absorberrohr. Geringfügige Abweichungen bis zum fünffachen des Durchmessers des Absorberrohrs sind möglich. Dadurch, dass der Schwerpunkt des Parabolrinnen-Kollektors nahe an der Drehachse liegt, verringert sich das Gewicht der erforderlichen Tragstruktur. Die Verbindung der Absorberrohre untereinander erfolgt über Verstrebungen, die gleichzeitig die erforderlichen Lager und den Antrieb enthalten. In der Kollektormitte können gegebenenfalls notwendige Versteifungen vorgesehen sein. Die Erfindung bietet den Vorteil der Aufteilung der Spiegelfläche in zueinander versetzte Spiegelsegmente, wodurch der Weg der reflektierten Strahlung minimiert wird. Ferner ergibt sich eine reduzierte Windlast. Die Hauptträgheitsachse und die Brennlinie fallen zusammen, wodurch der konstruktive Aufwand verringert wird. Für jedes der hintereinander in einer Reihe angeordneten Kollektorelemente kann ein eigener dezentraler Antrieb über einen Schrittmotor vorgesehen sein. Möglich ist ferner der gemeinsame Antrieb über eine zentrale Hydraulikeinheit. Der dezentrale Antrieb bietet aber den Vorteil, mit der Verdrehung einzelner SCE die eingefangene Lichtmenge flexibel an den Energieerzeugungsprozess anzupassen.

## Patentansprüche

1. Fixed Focus Parabolrinnen-Kollektor mit einer langgestreckten Spiegelstruktur (10) mit einer Längsmittelebene (11) und einer Brennlinie, und einem entlang der Brennlinie verlaufenden Absorberrohr (13), wobei die Spiegelstruktur aus mehreren parabelförmig gekrümmten, auf das Absorberrohr (13) fokussierten Spiegelsegmenten (S1, S2, S3) besteht, welche ein mittig zur Längsmittelebene angeordnetes erstes Spiegelsegment (S1) und zwei seitlich benachbarte Spiegelsegmente (S2) umfassen,
**dadurch gekennzeichnet,**
**dass** das erste Spiegelsegment (S1) mit den benachbarten zweiten Spiegelsegmenten (S2) jeweils einen Spalt (14) bildet, durch den Strahlung, die von einem dritten Spiegelsegment (S3) reflektiert wird, auf das Absorberrohr (13) trifft,
wobei jedes der drei Spiegelsegmente (S1, S2, S3) parabelförmig gekrümmt und auf das Absorberrohr fokussiert ist.

2. Fixed Focus Parabolrinnen-Kollektor nach Anspruch 1, **dadurch gekennzeichnet, dass** die Spiegelsegmente (S1, S2, S3) symmetrisch zu einer Längsmittelebene (11) angeordnet sind, welche das Absorberrohr (13) enthält.

3. Fixed Focus Parabolrinnen-Kollektor nach Anspruch 2, **dadurch gekennzeichnet, dass** die Spiegelsegmente (S1, S2, S3) in der Projektion von Strahlung, die parallel zu der Längsmittelebene (11) einfällt, überlappungsfrei angeordnet sind.

4. Fixed Focus Parabolrinnen-Kollektor nach einem der Ansprüche 1 - 3, **dadurch gekennzeichnet, dass** zwei symmetrisch zu der Längsmittelebene (11) angeordnete seitliche Spiegelsegmente (52) gegenüber einem mittigen Spiegelsegment (S1) in Richtung des Strahlungseinfalls vorversetzt sind und dass zwei äußere Spiegelsegmente (53) gegenüber den seitlichen Spiegelsegmenten (S2) zurückversetzt sind.

5. Fixed Focus Parabolrinnen-Kollektor nach einem der Ansprüche 1 - 4, **dadurch gekennzeichnet, dass** jedes der Spiegelsegmente um das Absorberrohr (13) als Drehachse schwenkbar ist.

6. Fixed Focus Parabolrinnen-Kollektor nach einem der Ansprüche 1 - 5, **dadurch gekennzeichnet, dass** die Spiegelsegmente (S1, S2, S3) an einer gemeinsamen Stützstruktur (20) befestigt sind, die um das Absorberrohr (13) schwenkbar ist.

7. Fixed Focus Parabolrinnen-Kollektor nach Anspruch 6, **dadurch gekennzeichnet, dass** die Stützstruktur (20) und die Spiegelsegmente (S1, S2, S3) so angeordnet sind, dass ihr gemeinsamer Schwerpunkt mit dem Brennpunkt der Spiegelstruktur zusammenfällt.

8. Fixed Focus Parabolrinnen-Kollektor nach einem der Ansprüche 1 - 7, **dadurch gekennzeichnet, dass** die Länge des Parabolrinnen-Kollektors in mehrere Solarkolfektorelemente unterteilt ist und dass jedes dieser Elemente einzeln angetrieben ist.

## Claims

1. A fixed focus parabolic trough collector comprising an elongate mirror structure (10) having a longitudinal central plane (11) and a focal line and comprising an absorber pipe (13) extending along the focal line, wherein the mirror structure consists of a plurality of parabolically curved mirror segments (S1,S2,S3) focused on the absorber pipe (13), said mirror segments comprising a first mirror segment (S1) arranged centrally of the longitudinal central plane (11) and two laterally adjacent mirror segments (S2),
**characterized in**
**that** the first mirror segment (S1) together with said adjacent second mirror segments (S2) forms a respective gap (14) through which radiation reflected by a third mirror segment (S3) is incident onto the absorber pipe (13),
each of said three mirror segments (S1,S2,S3) being curved and focused on the absorber pipe.

2. The fixed focus parabolic trough collector of claim 1, **characterized in that** the mirror segments (S1,S2,S3) are arranged symmetrically to a longitudinal central plane (11) including the absorber pipe (13).

3. The fixed focus parabolic trough collector of claim 2, **characterized in that** the mirror segments (S1,S2,S3) are arranged free of overlap in the projection of radiation which is incident parallel to the longitudinal central plane (11).

4. The fixed focus parabolic trough collector of any one of claims 1 - 3, **characterized in that** two lateral mirror segments (S2), arranged symmetrically to the longitudinal central plane (11), are situated forward in the direction of the incidence of radiation relative to a central mirror segment (S1), and that two outer mirror segments (S3) are situated backward relative to said lateral mirror segments (S2).

5. The fixed focus parabolic trough collector of any one of claims 1 - 4, **characterized in that** each of the mirror segments is pivotable about the absorber pipe (13) as an axis of rotation.

6. The fixed focus parabolic trough collector of any one of claims 1 - 5, **characterized in that** the mirror segments (S1,S2,S3) are fastened to a common support structure (20) which is pivotable about the absorber pipe (13).

7. The fixed focus parabolic trough collector of claim 6, **characterized in that** the support structure (20) and the mirror segments (S1,S2,S3) are arranged in such a manner that their common center of gravity coincides with the focal point of the mirror structure.

8. The fixed focus parabolic trough collector of any one of claims 1 - 7, **characterized in that** the length of the parabolic trough collector is divided into a plurality of solar collector elements and that each of said elements is driven individually.

## Revendications

1. Collecteur cylindro-parabolique à foyer fixe comprenant une structure de miroirs réflecteurs (10), étendue en longueur, comportant un plan médian longitudinal (11) et une ligne focale, et un tube absorbeur (13) s'étendant le long de la ligne focale, où la structure de miroirs réflecteurs se compose de plusieurs segments de miroirs réflecteurs (S1, S2, S3) incurvés en forme de parabole et focalisés sur le tube absorbeur (13), lesquels segments de miroirs réflecteurs comprennent un premier segment de miroirs réflecteurs (S1) disposé de façon centrée par rapport au plan médian longitudinal et deux segments de miroirs réflecteurs (S2) adjacents latéralement,
**caractérisé**
**en ce que** le premier segment de miroirs réflecteurs (S1) forme à chaque fois, avec les deuxièmes segments de miroirs réflecteurs (S2) adjacents, un intervalle (14) à travers lequel le rayonnement, qui est réfléchi par un troisième segment de miroirs réflecteurs (S3), est incident sur le tube absorbeur (13),
où chacun des trois segments de miroirs réflecteurs (S1, S2, S3) est incurvé en forme de parabole et focalisé sur le tube absorbeur.

2. Collecteur cylindro-parabolique à foyer fixe selon la revendication 1, **caractérisé en ce que** les segments de miroirs réflecteurs (S1, S2, S3) sont disposés symétriquement par rapport à un plan médian longitudinal (11) qui contient le tube absorbeur (13).

3. Collecteur cylindro-parabolique à foyer fixe selon la revendication 2, **caractérisé en ce que** les segments de miroirs réflecteurs (S1, S2, S3), dans la projection de rayonnement qui est incident parallèlement au plan médian longitudinal (11), sont disposés en ne formant aucun chevauchement.

4. Collecteur cylindro-parabolique à foyer fixe selon l'une quelconque des revendications 1 à 3, **caractérisé en ce que** deux segments de miroirs réflecteurs latéraux (S2) disposés symétriquement par rapport au plan médian longitudinal (11) sont décalés vers l'avant, en direction de l'incidence de rayonnement, par rapport à un segment de miroirs réflecteurs (S1) centré, et **en ce que** deux segments de miroirs réflecteurs extérieurs (S3) sont décalés vers l'arrière par rapport aux segments de miroirs réflecteurs latéraux (S2).

5. Collecteur cylindro-parabolique à foyer fixe selon l'une quelconque des revendications 1 à 4, **caractérisé en ce que** chacun des segments de miroirs réflecteurs est pivotant autour du tube absorbeur (13) servant d'axe de rotation.

6. Collecteur cylindro-parabolique à foyer fixe selon l'une quelconque des revendications 1 à 5, **caractérisé en ce que** les segments de miroirs réflecteurs (S1, S2, S3) sont fixés sur une structure de support (20) commune qui peut pivoter autour du tube absorbeur (13).

7. Collecteur cylindro-parabolique à foyer fixe selon la revendication 6, **caractérisé en ce que** la structure de support (20) et les segments de miroirs réflecteurs (S1, S2, S3) sont disposés de manière telle, que leur centre de gravité commun coïncide avec le foyer de la structure de miroirs réflecteurs.

8. Collecteur cylindro-parabolique à foyer fixe selon l'une quelconque des revendications 1 à 7, **caractérisé en ce que** la longueur du collecteur cylindro-parabolique est subdivisée en plusieurs éléments de collecteur solaire, et **en ce que** chacun de ces éléments est commandé individuellement.
